# EUROPEAN PATENT SPECIFICATION

(11) **EP 2 760 250 B1**
(45) Date of publication and mention of the grant of the patent: **29.08.2018**
(21) Application number: 12834235.9
(22) Date of filing: 28.06.2012
(51) Int. Cl.: H04L 29/08, G06F 9/50, H04W 4/70, H04L 29/06

(54) **M2M PLATFORM CLOUD SYSTEM AND M2M SERVICE PROCESSING METHOD THEREOF**
M2M-PLATTFORM-CLOUDSYSTEM UND VERFAHREN ZUR VERARBEITUNG EINES M2M-DIENSTES DAFÜR
SYSTÈME DE NUAGE À PLATES-FORMES M2M ET PROCÉDÉ ASSOCIÉ DE TRAITEMENT DE SERVICES M2M

(30) Priority: 23.09.2011 CN 201110286627
(43) Date of publication of application: 30.07.2014
(73) Proprietor: ZTE Corporation, Shenzhen, Guangdong 518057 (CN)
(72) Inventor: ZHAO, Changjun, Shenzhen Guangdong 518057 (CN)
(74) Representative: Gevers Patents
(86) International application number: PCT/CN2012/077794
(87) International publication number: WO 2013/040925

(56) References cited:
- CN-A- 101 730 136
- CN-A- 101 877 718
- CN-A- 102 104 883
- CN-A- 102 111 288
- US-A1- 2006 235 973
- US-B1- 7 698 398
- SRIRAMA S N ET AL: "Mobile Web Service Provisioning", TELECOMMUNICATIONS, 2005. AICT-ICIW '06. INTERNATIONAL CONFERENCE ON I NTERNET AND WEB APPLICATIONS AND SERVICES/ADVANCED INTERNATIONAL CONFE RENCE ON GUADELOPE, FRENCH CARIBBEAN 19-25 FEB. 2006, PISCATAWAY, NJ, USA,IEEE, 19 February 2006 (2006-02-19), pages 120-120, XP010898445, DOI: 10.1109/AICT-ICIW.2006.215 ISBN: 978-0-7695-2522-8

## Description

### TECHNICAL FIELD

The disclosure relates to an internet of things, and particularly to a Machine to Machine (M2M) platform cloud system and an M2M service processing method thereof.

### BACKGROUND

Very similar to an internet, an internet of things is 'the internet of connected things' for interconnecting a plurality of devices. First of all, the internet of things, the core and basis of which still lies in the internet, is a network extended and expanded on the basis of the internet. Secondly, the user terminal of the internet of things is extended and expanded to any object, that is, with the internet of things, information exchange and communication can be achieved between optional objects. Thus, the internet of things is defined as follows: a network which connects any object with the internet using information sensing equipments, including a Radio Frequency Identification (RFID) device, an infrared sensor, a global positioning system and a laser scanner, according to an agreed protocol, so as to identify, position, track, monitor and manage the object intelligently.

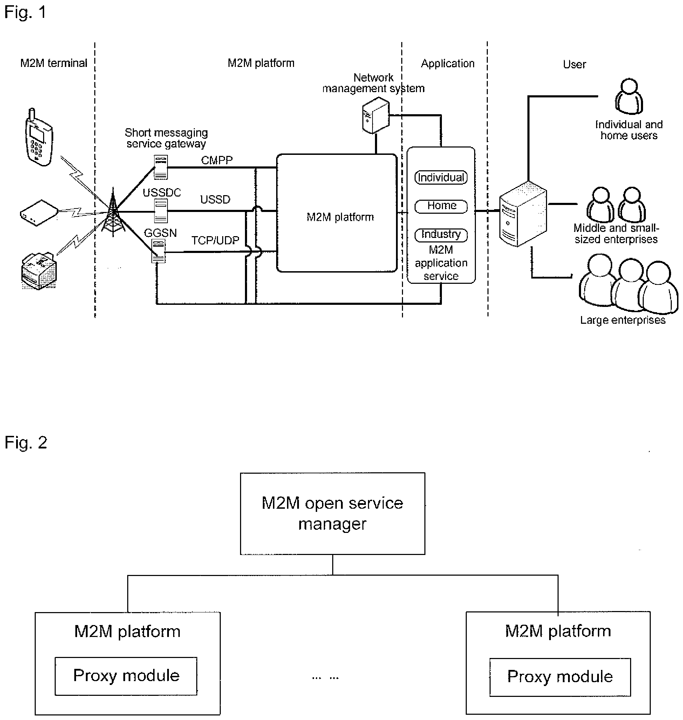

The internet of things may be implemented in many ways but is currently at the initial development stage. The core network control and forwarding node of the internet of things is an M2M platform. Fig. 1 shows a typical network structure of an existing M2M system, in which the M2M system includes multiple M2M terminals, an M2M platform, multiple applications and multiple users. Each of the users is a user using an M2M service. The applications may be various industrial applications. The M2M platform implements the access of the M2M terminals and the access of the applications, so as to implement the exchange of data between the M2M terminals and the applications. All the applications and M2M terminals in the M2M system need to be registered and logged in the M2M platform, by which communication between the applications and the M2M terminals is forwarded and functions including traffic control and authentication are implemented.

In document US 2006/0235973 A1, network services infrastructure systems and methods are provided. Policies for client access to a services network and network services available in the services network are enforced at client gateways. A client of the services network may make its own network service(s) available in the services network, use network services provided by other clients of the services network, or both. The policies are centrally managed within a services network and distributed to the client gateways.

The document "Mobile Web Service Provisioning" by SRIRAMA S N et al. discloses a Web Services architecture.

Furthermore, document US 7 698 398 B1 provides a system and method for generating Web Services using a Web Services Structured Methodology. One embodiment may be implemented as a Web Services architecture design mechanism. Lifecycles of the Web Services design process may include vision and strategy, architecture design, development, integration, and deployment. In one embodiment, the Web Services architecture design mechanism may implement a structured methodology design process for Web Services. One embodiment may include a reusable Web Services design pattern catalogue and a mechanism for maintaining and updating the catalogue and for using the catalogue to apply design patterns when designing and implementing Web Services. One embodiment may be used for Enterprise and Cross Enterprise Integration of Web Services. One embodiment may be used for Legacy Mainframe Integration and Interoperability with Web Services.

With the development of the internet of things, there will undoubtedly be more and more M2M terminals, and it will be difficult for a single M2M platform limited in processing capability to cope with the management on and the application logics of a great number of M2M terminals.

### SUMMARY

In view of this, the disclosure mainly aims to provide an M2M platform cloud system and the M2M service processing method thereof, to integrate a plurality of M2M platforms into one system.

To this end, the technical solutions of the disclosure are implemented as follows.

According to an embodiment of the disclosure, an M2M platform cloud system is provided. Preferably, the M2M platform cloud system includes: an M2M open service manager, and two or more M2M platforms each including a proxy module. The M2M open service manager is configured to communicate with each of the two or more M2M platforms via the respective proxy module, and each of the two or more M2M platforms is configured to communicate with one another via their respective proxy modules;
wherein:
the two or more M2M platforms at least comprises a first M2M platform and a second M2M platform;
the second M2M platform is configured to send a service inquiry request to the M2M open service manager via the proxy module of the second M2M platform, acquire information of a service to be called from the M2M open service manager, send, according to the information of the service to be called, a service call request including the information of the service to be called via the proxy module of the second M2M platform to a first M2M platform having a service capability of calling the service to be called, and receive a call result via the proxy module of the second M2M platform from the first M2M platform;
the M2M open service manager is configured to obtain the information of the service to be called in response to the service inquiry request, and return the obtained information to the second M2M platform;
the M2M open service manager is further configured to generate a check field for authentication, and return the information of the service to be called including the check field to the second M2M platform; and
the first M2M platform is configured to receive the service call request including the check field via the proxy module of the first M2M platform; initiate authentication to the M2M open service manager based on the check field; carry out a service call operation corresponding to the service call request when the authentication is passed, and return the call result obtained through the service call operation to the second M2M platform via the proxy module of the first M2M platform.

According to an embodiment of the disclosure, an M2M service call method is further provided. Preferably, the M2M service call method includes: a second M2M platform acquires information of a service to be called; the second M2M platform sends, according to the information of the service to be called, a service call request including the information of the service to be called via the proxy module of the second M2M platform to a first M2M platform having a service capability of calling the service to be called; and the second M2M platform receives, via the proxy module of the second M2M platform, a call result from the first M2M platform;
wherein the acquiring, by the second M2M platform, the information of the service to be called comprises:
sending, by the second M2M platform, a service inquiry request to an M2M open service manager via the proxy module of the second M2M platform; and
in response to the service inquiry request, obtaining, by the M2M open service manager, the information of the service to be called, and returning the obtained information to the second M2M platform;
wherein the information of the service to be called acquired by the second M2M platform further comprises: a check field for authentication generated by the M2M open service manager, and
the method further comprising: before the second M2M platform receives the call result via the proxy module of the second M2M platform from the first M2M platform,
receiving, by the first M2M platform, the service call request including the check field via the proxy module of the first M2M platform;
initiating authentication to the M2M open service manager based on the check field;
carrying out a service call operation corresponding to the service call request when the authentication is passed; and
returning the call result obtained through the service call operation to the second M2M platform via the proxy module of the first M2M platform.

In the M2M platform cloud system and the M2M service processing method thereof of the embodiments of the disclosure, the M2M open service manager configured to manage all M2M platforms is arranged in the M2M platform cloud system and the proxy module is arranged in each M2M platform; through publishing, cancelling and calling services, multiple M2M platforms having different service capabilities are integrated to provide a powerful M2M cloud calculation capability; when applied to the internet of things, the system and the method disclosed herein may multiplex capabilities of peer-to-peer M2M platforms, thus enhancing the cloud calculation capability and service multiplexing capability of the internet of things as well as the foreign service capability of the M2M system, enriching service contents and making full use of network resources and development resources of the internet of things.

In addition, in the embodiments of the disclosure, the proxy module of each M2M platform uses a standard structure, and is able to implement the unified management and maintenance of all interfaces of the whole network, thus simplifying the implementation of each M2M platform and reducing the development cost of independent interfaces.

### BRIEF DESCRIPTION OF THE DRAWINGS

Fig. 1 is a schematic diagram illustrating a structure of an existing M2M system;
Fig. 2 is a schematic diagram illustrating a structure of an M2M platform cloud system according to an embodiment of the disclosure;
Fig. 3 is a flowchart illustrating the implementation of an M2M service call method according to an embodiment of the disclosure;
Fig. 4 is a schematic diagram illustrating a structure of an M2M platform cloud system according to embodiment 1 of the disclosure;
Fig. 5 is a flowchart illustrating the process of publishing an information inquiry service of a parking lot S according to embodiment 1 of the disclosure;
Fig. 6 is a flowchart illustrating the process of inquiring the information inquiry service of the parking lot S according to embodiment 1 of the disclosure; and
Fig. 7 is a flowchart illustrating the process of cancelling the information inquiry service of the parking lot S according to embodiment 1 of the disclosure.

### DETAILED DESCRIPTION

The basic idea of the disclosure is to provide an M2M platform cloud system, which includes an M2M open service manager configured to manage each M2M platform, a proxy module (AGENT) is arranged in each M2M platform, the M2M open service manager is configured to communicate with each M2M platform via the proxy module of the each of the M2M platforms, and each of the two or more M2M platforms is configured to communicate with one another via their respective proxy modules. In this way, a plurality of unrelated M2M platforms are formed into a distributed sharing system by means of a universal interface definition to share traffic, service and data among the plurality of M2M platforms, so as to make full use of network resources and development resources of existing internets of things.

As shown in Fig. 2, an M2M platform cloud system provided in an embodiment of the disclosure includes: an M2M open service manager, and two or more M2M platforms each of which includes a proxy module. The M2M open service manager is configured to communicate with each of the two or more M2M platforms via the respective proxy module, and each of the two or more M2M platforms is configured to communicate with one another via their respective proxy modules.

The M2M open service manager is configured to manage each M2M platform to make all M2M platforms cooperate with each other to process (such as publish, inquire, call and cancel) an M2M service. In addition, the M2M open service manager is also configured to authenticate each M2M platform during an M2M service processing procedure.

The proxy modules are all standard components, and the proxy modules arranged on different M2M platforms are substantially identical in structure and function. Specifically, the proxy module provides a call interface, and has a function of initiating various operation requests (such as a service inquiry request, a service publishing request and a service cancelling request) and an authentication request to the M2M open service manager and a function of initiating a service call request to other M2M platforms, thus implementing the unified management and maintenance for all internets of the whole network, simplifying the implementation of each M2M platform and reducing the development cost of independent interfaces.

Specifically, each of the M2M open service manager and the proxy module is provided with a service publishing interface and a service inquiry interface which are for interaction between the M2M platform and the M2M open service manager. Furthermore, each of the M2M open service manager and the proxy module is provided with a service cancelling interface and/or an authentication interface. The proxy module is further provided with a service call interface for interaction between the M2M platforms, so as to provide a capability call interface for the M2M platform to which the proxy module belongs.

Correspondingly, an embodiment of the disclosure also provides an M2M service publishing method, which includes: an M2M open service manager receives, from a proxy module of an M2M platform, a service publishing request including information of a service to be published; and in response to the service publishing request, the M2M open service manager stores the information of the service to be published. Here, the information of the service to be published includes a serving URL (Uniform Resource Locator) of the service to be published. The information of the service to be published may further include one or more of the followings: a service type, a service subtype, a service attribute, a service name and an access right of the service to be published.

Before the information of the service is stored, the method further includes: in response to the service publishing request, the M2M platform is authenticated. When the M2M platform passes the authentication, the M2M open service manager stores the information of the service to be published. Specifically, the service publishing request includes an M2M platform account number of the M2M platform requesting for the publishing of the service and an MD5 check field, and the M2M platform is authenticated based on the M2M platform account number and the MD5 check field.

Specifically, the M2M open service manager classifies and stores the information of the service to be published, to facilitate other M2M platforms to inquire the information. The service type, the service subtype and the service name may all service as a storage dimension. For example, for a library's books information inquiry service, the service type of this service is a public service, the service subtype thereof is library, and the service code is a unified code of the library. The M2M open service manager stores the service code and the serving URL of the library's books information inquiry service into the database of the M2M open service manager by taking the service type of the library's books information inquiry service as a root directory, taking the service subtype of the library's books information inquiry service as a parent directory, and taking the service name of the library's books information inquiry service as a child directory. In this way, the M2M platform inquires and acquires the URL of the library inquiry service from the M2M open service manager by using the service name and the service type as an inquiry condition.

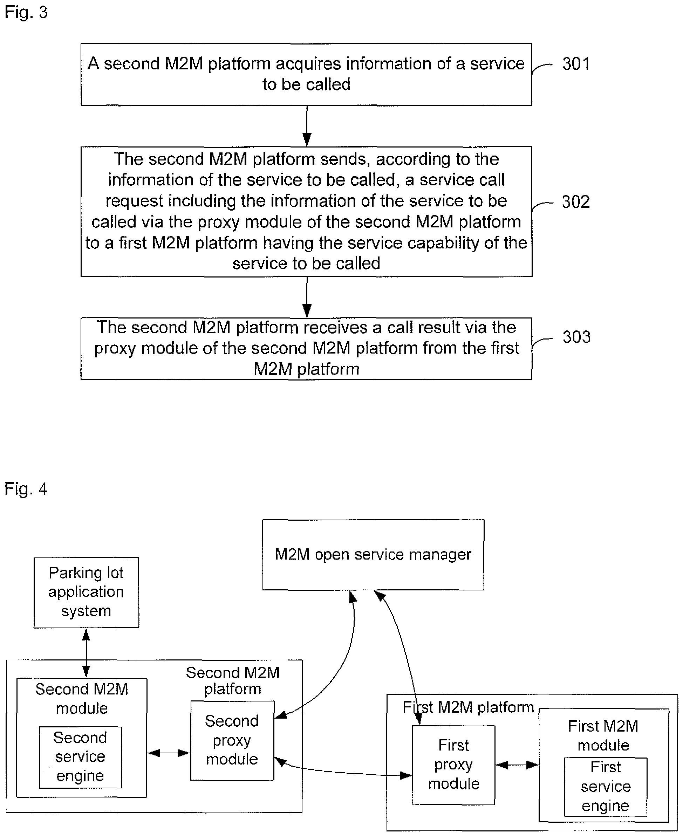

Accordingly, an M2M service call method is also provided in an embodiment of the disclosure. As shown in Fig. 3, the M2M service call method mainly includes:
Step 301: A second M2M platform acquires information of a service to be called.
Step 302: The second M2M platform sends, according to the information of the service to be called, a service call request including the information of the service to be called via the proxy module of the second M2M platform to a first M2M platform having the service capability of the service to be called.
Step 303: The second M2M platform receives a call result via the proxy module of the second M2M platform from the first M2M platform.

Before the second M2M platform receives the call result via the proxy module of the second M2M platform from the first M2M platform, the method further includes: the first M2M platform receives the service call request via the proxy module of the first M2M platform, carries out a service call operation corresponding to the service call request, and returns via the proxy module of the first M2M platform the call result obtained through the service call operation to the second M2M platform.

Specifically, the process that the second M2M platform acquires the information of the service to be called includes: the second M2M platform sends a service inquiry request via the proxy module of the second M2M platform to the M2M open service manager; and in response to the service inquiry request, the M2M open service manager obtains the information of the service to be called, and returns the obtains information to the second M2M platform.

Here, the process that the second M2M platform acquires the information of the service to be called further includes: the M2M open service manager generates a check field (hashcheck) for authentication, adds the check field into the information of the service to be called, and returns the information of the service to be called to the second M2M platform. Before the second M2M platform receives the call result via the proxy module of the second M2M platform from the first M2M platform, the method further includes: the first M2M platform receives the service call request including the check field via the proxy module of the first M2M platform, initiates an authentication from the M2M open service manager based on the check field, carries out the service call operation corresponding to the service call request when the authentication is passed, and returns via the proxy module of the first M2M platform the call result obtained through the service call operation to the second M2M platform.

Here, the information of the service to be called includes the serving URL of the service to be called. The serving URL includes the address of the first M2M platform having the service capability of calling the service to be called.

Furthermore, during the call process, the M2M open service manager may further determine, according to the access right information of the service to be called stored in the M2M open service manager, whether to return the information of the service to be called to the second M2M platform. In this way, an illegal address inquiry can be prevented.

In the practical application, once an application accesses the second M2M platform to expect to obtain an M2M service, the application initiates a service request corresponding to the M2M service and including attribute information of a service to be called. After receiving the service request of the application, the second M2M platform inquires whether the second M2M platform has a corresponding service capability. If the second M2M platform has the corresponding service capability, then the second M2M platform carries out a service call operation immediately in response to the service request, and returns a call result to the application. If the second M2M platform has no corresponding service capability, then the second M2M platform initiates a service inquiry request via the proxy module of the second M2M platform to the M2M open service manager to acquire the information of the service to be called. In response to the service inquiry request, the M2M open service manager searches for the information of the service to be called from the database thereof, returns the information including the serving URL via the proxy module of the second M2M platform to the second M2M platform, and assigns a check field (hashcheck) for authentication for the call of a peer M2M platform. After acquiring the serving URL of the service to be called and determining that a corresponding service can be called, the second M2M platform sends, via the proxy module of the second M2M platform, a service call request to the first M2M platform having the service capability of calling the service to be called. The first M2M platform receives the service call request via the proxy module of the first M2M platform, requests the M2M open service manager to authenticate the first M2M platform based on the hashcheck in the service call request, carries out a corresponding service call operation after the first M2M platform is authenticated successfully, and returns a call result to the second M2M platform. At last, the second M2M platform returns the call result to the application.

Correspondingly, an M2M service cancelling method is also provided in an embodiment of the disclosure. The M2M service cancelling method includes: an M2M open service manager receives a service cancelling request from an M2M platform configured to publish a service to be cancelled, wherein the service cancelling request is send via the proxy module of the M2M platform; and in response to the service cancelling request, the M2M open service manager locates and cancels the stored information of the service to be cancelled. Here, the service name of the service to be cancelled is included in the service cancelling request, and the M2M open service manager locates corresponding service information from the database thereof based on the service name of a service to be inquired, and cancels the inquired service information.

### Embodiment 1

In the embodiment, the M2M platform cloud system provided herein and the M2M service processing process thereof are elaborated below by taking the acquisition of the available parking space of a parking lot S by a parking lot information inquiry application.

As shown in Fig. 4, in the embodiment, the M2M platform cloud system for processing the information inquiry service of the parking lot may include: an M2M open service manger, a first M2M platform and a second M2M platform. The first M2M platform includes a first M2M module and a first proxy module, and the first M2M module includes a first service engine configured to process the services in the charge of the first M2M platform. The second M2M platform includes a second M2M module and a second proxy module, and the second M2M module includes a second service engine configured to process the services in the charge of the second M2M platform. The M2M open service manager is configured to manage the open service capabilities published by the first M2M platform and the second M2M platform, authenticate the first M2M platform and the second M2M platform, and provide external publishing, cancel, addressing and authentication interfaces. The first M2M platform interacts with the M2M open service manager via the first proxy module, the second M2M platform interacts with the M2M open service manager via the second proxy module, and the first M2M platform and the second M2M platform interact with each other via the first proxy module and the second proxy module.

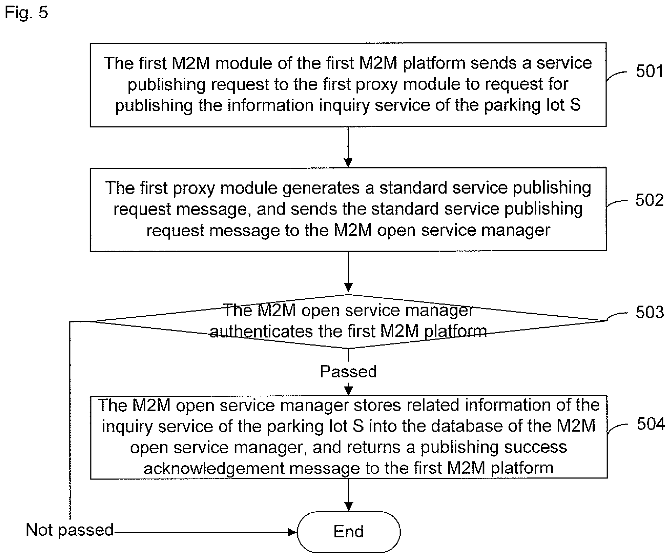

As shown in Fig. 5, the process of publishing the information inquiry service of the parking lot S may mainly include the following steps:
Step 501: The first M2M module of the first M2M platform sends a service publishing request to the first proxy module to request for publishing the information inquiry service of the parking lot S.
Here, the service publishing request includes: the name, the URL, the type, the subtype, the attribute list and the access right of a service.
Step 502: The first proxy module generates a standard service publishing request message, and sends the standard service publishing request message to the M2M open service manager.
Specifically, as shown in following Table 2, the standard service publishing request message includes a message head and a message body. The message head includes the M2M platform account number of the first M2M platform, an MD5 check field for authentication, a request timestamp and a request serial number. The request timestamp is randomly generated based on a request time, the request serial number is generated randomly, and the MD5 check field is obtained by carrying out an MD5 operation for a password corresponding to the M2M platform account number. The message body includes the URL, the name, the type and the subtype of the service, each attribute of the called service and an application having a service call right.

**Table 1**

| | | |
|---|---|---|
| Service publishing request | Message head | M2M platform account number |
| | | MD5 check field |
| | | Request timestamp |
| | | Request serial number |
| | Message body | URL of the service |
| | | Name of the service |
| | | Type of the service: Public service |
| | | Subtype of the service: Parking lot information |
| | | Identification information: Parking lot number of the parking lot S |
| | | Attribute 1 of the called service |
| | | Service area of the parking lot S |
| | | Attribute 2 of the called service |
| | | Type of inquiry information: 1: available, 2: occupied, 3: all |
| | | Application having a service call right: |
| | | industrial application 0001 of which the type is a public service; and/or |
| | | industrial application of which the priority is 0002 |

Step 503: The M2M open service manager receives the service publishing request message, and authenticates the first M2M platform according to the message head of the service publishing request message. If the authentication is passed, Step 504 is executed; otherwise, the publishing is failed and the current flow is ended.
The M2M open service manager authenticates the first M2M platform based on the M2M platform account number of the first M2M platform and the MD5 check field. Specifically, the M2M management module carries out the MD5 operation for the MD5 check field to obtain the password corresponding to the M2M platform account number, and verifies whether the obtained password and M2M platform account number are consistent with those stored in the M2M management module. If the obtained password and M2M platform account number are consistent with those stored in the M2M management module, the authentication is passed; otherwise, the authentication is failed.
Step 504: The M2M open service manager stores related information of the inquiry service of the parking lot S into the database of the M2M open service manager according to related information of the inquiry service of the parking lot S included in the service publishing request message, such as the type, the subtype and the name of the service, and returns a publishing success acknowledgement message to the first M2M platform via the first proxy module. So far, the inquiry service of the parking lot S is published successfully, and the current flow is ended.

Specifically, to facilitate each M2M platform to accurately inquire the open public service, the M2M open service manager may store service-related information according to the service type. Related information of the service is first stored into a corresponding service class according to the types of services, then stored into a corresponding service sub-class according to the subtypes of services, and last stored by taking a service name as the storage name of related information of the service.

In the embodiment, the related information of the information inquiry service of the parking lot S stored in the M2M open service manager is shown in the following Table 2:

**Table 2**

| Name of the service | URL of the service | class of the service | subclass of the service | Attribute list of the service | Right information |
|---|---|---|---|---|---|
| Information of the parking lot S | http://www.m2mpl atform.com/parkin ginforeq</serviceurl | Public service | Parking lot information | Parking lot number, service area, inquiry information type | 0001 |
| | | | | | 0002 |

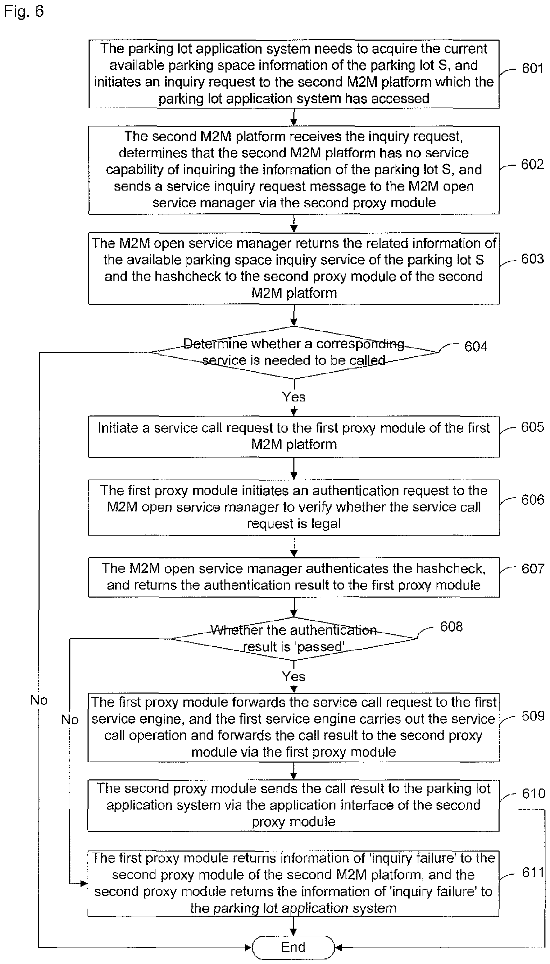

As shown in Fig. 6, the process that a parking lot application system calls the information inquiry service of the parking lot S to inquire the information of the parking lot S specifically includes the following steps:
Step 601: The parking lot application system needs to acquire the current available parking space information of the parking lot S, and initiates an inquiry request to the second M2M platform which the parking lot application system has accessed.
Here, the inquiry request includes the name, the type and the subtype of the available parking space inquiry service of the parking lot S and the parking lot number to be inquired.
Step 602: The second M2M platform receives the inquiry request, determines that the second M2M platform has no service capability of inquiring the information of the parking lot S, and sends a service inquiry request message to the M2M open service manager via the second proxy module.
Specifically, the second M2M platform inquires service information of the service capabilities the second M2M platform has, and determines that the second M2M platform has no service capability of inquiring the information of the parking lot S when no service name in the inquiry request is inquired out.
Specifically, the second proxy module sends a service addressing inquiry request message to the M2M open service manager. The format of the service addressing inquiry request message is as shown in Table 3. The service addressing inquiry request message includes a message head and a message body. The message head includes the M2M platform account number of the second M2M platform, an MD5 check field for authentication, a request timestamp and a request serial number. The message body includes the service type and the service subtype of the available parking space inquiry service of the parking lot S and the parking lot number to be inquired.

**Table 3**

| | | |
|---|---|---|
| Service inquiry request | Message head | M2M platform account number |
| | | MD5 check field |
| | | Request timestamp |
| | | Request serial number |
| | Message body | Type of the service: Public service |
| | | Subtype of the service |
| | | Parking lot number |
| | | Type of inquiry information: 1 |

Step 603: The M2M open service manager inquires related information, such as the serving URL, of the available parking space inquiry service of the parking lot S from the database of the M2M open service manager according to the service inquiry request, generates a hashcheck, and returns the related information of the available parking space inquiry service of the parking lot S and the hashcheck to the second proxy module of the second M2M platform.
Specifically, the M2M open service manager queries basic information of the parking lot S from the database thereof according to the service type, the service subtype and the parking lot number contained in the service inquiry request, wherein the basic information of the parking lot S contains a called URL.
Step 604: The second proxy module receives the related information of the service and the hashcheck, and sends the related information of the service and the hashcheck to the second service engine of the second M2M module; and the second service engine determines, according to the related information of the service, whether to need to call a corresponding service. If the corresponding service is needed to be called, Step 605 is executed; otherwise, the current flow is ended directly.
Specifically, the second service engine determines, according to a preset service call rule, whether to carry out the subsequent service call. The second service engine verifies whether the related information of the service meets the requirement of the preset service call rule, and continues to carry out the subsequent service call if the related information of the service meets the requirement of the preset service call rule; otherwise, the current flow is ended.
For example, the second service engine determines whether the serving URL includes a preset service call allowable domain name. If the URL of the service includes the preset service call allowable domain name, the call of a corresponding service is allowed; otherwise, the call of the corresponding service is forbidden.
Step 605: The second service engine finds out, according to the related information of the service, such as the URL of the service, that the first M2M platform has the service capability of inquiring the information of the parking lot S, acquires the address of the first M2M platform from the serving URL, and initiates a service call request to the first proxy module of the first M2M platform via the second proxy module.
The service call request includes the related information of the available parking space inquiry service of the parking lot S and the hashcheck.
Step 606: The first proxy module receives the service call request, extracts the hashcheck from the service call request, and initiates an authentication request to the M2M open service manager to verify whether the service call request is legal. Here, the authentication request includes the hashcheck.
Step 607: The M2M open service manager authenticates the hashcheck in the authentication request, verifies whether the hashcheck is legal, and returns the authentication result to the first proxy module.
Specifically, the M2M open service manager verifies whether the hashcheck in the authentication request is the same as that generated in Step 603. If the hashcheck in the authentication request is the same as that generated in Step 603, the hashcheck in the authentication request is legal; otherwise, the hashcheck in the authentication request is illegal.
Step 608: The first proxy module receives the authentication result. If the authentication result is 'passed', Step 609 is executed; otherwise, Step 611 is executed.
Step 609: The first proxy module forwards the service call request to the first service engine, and the first service engine carries out the service call operation and forwards the call result to the second proxy module via the first proxy module after obtaining the call result.
Specifically, the first service engine inquires, according to the service type, the service subtype, the parking lot number and the inquired information type in the service call request, available parking space information of the parking lot S identified by the parking lot number, and packages the found available parking space information of the parking lot S to obtain the call result.
Step 610: The second proxy module of the second M2M platform sends the call result to the parking lot application system via the application interface of the second proxy module. So far, the parking lot application system acquires the available parking space information of the parking lot S; if the inquiry is succeeded, then the parking lot application system may push the available parking space information of the parking lot S to the user.
Step 611: The first proxy module returns information of 'inquiry failure' to the second proxy module of the second M2M platform, and the second proxy module returns the information of 'inquiry failure' to the parking lot application system. So far, the inquiry is failed, and the current flow is ended.

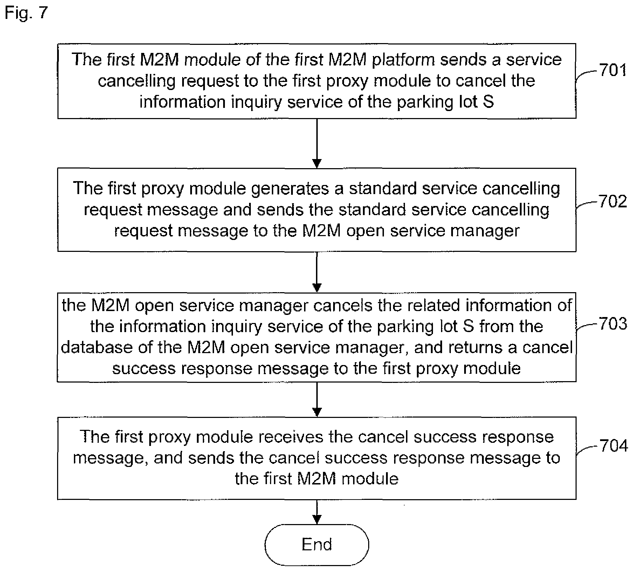

As shown in Fig. 7, the process of cancelling an information inquiry service of the parking lot S may specifically include the following steps:
Step 701: The first M2M module of the first M2M platform sends a service cancelling request to the first proxy module to cancel the information inquiry service of the parking lot S.
Wherein, the service cancelling request includes the service name of the information inquiry service of the parking lot S.
Step 702: The first proxy module generates a standard service cancelling request message, and sends the standard service cancelling request message to the M2M open service manager.
Specifically, the format of the standard service cancelling request message is as shown in Table 4. The service cancelling request message includes a message head and a message body. The message head includes an M2M platform account number, an MD5 check field for authentication, a request timestamp and a request serial number. The message body includes the service name of the information inquiry service of the parking lot S.

**Table 4**

| | | |
|---|---|---|
| Service cancelling request | Message head | M2M platform account number |
| | | MD5 check field |
| | | Request timestamp |
| | | Request serial number |
| | Message body | Service name |

Step 703: The M2M open service manager receives the service cancelling request, searches for related information of the information inquiry service of the parking lot S from the database of the M2M open service manager according to the service name in the service cancelling request, cancels the related information of the information inquiry service of the parking lot S from the database of the M2M open service manager, and returns a cancel success response message to the first proxy module.
Step 704: The first proxy module receives the cancel success response message, and sends the cancel success response message to the first M2M module. So far, the flow of cancelling the information inquiry service of the parking lot S is ended.

The above are the merely preferred embodiments of the disclosure, but are not intended to limit to the scope of protection of the claims of the disclosure.

## Claims

1. A Machine to Machine, M2M, platform cloud system, comprising:
an M2M open service manager, and two or more M2M platforms each comprising a proxy module,
wherein the M2M open service manager is configured to communicate with each of the two or more M2M platforms via the respective proxy module, and each of the two or more M2M platforms is configured to communicate with one another via their respective proxy modules;
wherein:
the two or more M2M platforms at least comprises a first M2M platform and a second M2M platform;
the second M2M platform is configured to send a service inquiry request to the M2M open service manager via the proxy module of the second M2M platform, acquire information of a service to be called from the M2M open service manager, send, according to the information of the service to be called, a service call request including the information of the service to be called via the proxy module of the second M2M platform to a first M2M platform having a service capability of calling the service to be called, and receive a call result via the proxy module of the second M2M platform from the first M2M platform;
**characterized in that** the M2M open service manager is configured to obtain the information of the service to be called in response to the service inquiry request, and return the obtained information to the second M2M platform;
**in that** the M2M open service manager is further configured to generate a check field for authentication, and return the information of the service to be called including the check field to the second M2M platform;
and **in that** the first M2M platform is configured to receive the service call request including the check field via the proxy module of the first M2M platform; initiate authentication to the M2M open service manager based on the check field; carry out a service call operation corresponding to the service call request when the authentication is passed, and return the call result obtained through the service call operation to the second M2M platform via the proxy module of the first M2M platform.

2. The system according to claim 1, wherein
each of the M2M open service manager and the proxy module is provided with a service publishing interface and a service inquiry interface which are for interaction between the M2M platform and the M2M open service manager.

3. The system according to claim 1 or 2, wherein each of the M2M open service manager and the proxy module is provided with a service cancelling interface and/or an authentication interface.

4. The system according to claim 1 or 2, wherein:
the proxy module is provided with a service call interface for interaction between the M2M platforms, so as to provide a capability call interface for the M2M platform to which the proxy module belongs

5. A Machine to Machine, M2M, service call method, comprising:
acquiring (301), by a second M2M platform, information of a service to be called;
sending (302), by the second M2M platform according to the information of the service to be called, a service call request including the information of the service to be called via the proxy module of the second M2M platform to a first M2M platform having a service capability of calling the service to be called; and
receiving (303), by the second M2M platform, a call result via the proxy module of the second M2M platform from the first M2M platform;
wherein the acquiring, by the second M2M platform, the information of the service to be called comprises:
sending, by the second M2M platform, a service inquiry request to an M2M open service manager via the proxy module of the second M2M platform; and
in response to the service inquiry request, obtaining, by the M2M open service manager, the information of the service to be called, and returning the obtained information to the second M2M platform;
**characterized in that** the information of the service to be called acquired by the second M2M platform further comprises: a check field for authentication generated by the M2M open service manager, and
the method further comprising: before the second M2M platform receives the call result via the proxy module of the second M2M platform from the first M2M platform,
receiving, by the first M2M platform, the service call request including the check field via the proxy module of the first M2M platform;
initiating authentication to the M2M open service manager based on the check field;
carrying out a service call operation corresponding to the service call request when the authentication is passed; and
returning the call result obtained through the service call operation to the second M2M platform via the proxy module of the first M2M platform.

6. The method according to claim 5, further comprising: before the second M2M platform receives the call result via the proxy module of the second M2M platform from the first M2M platform,
receiving, by the first M2M platform, the service call request via the proxy module of the first M2M platform, carrying out a service call operation corresponding to the service call request, and returning via the proxy module of the first M2M platform the call result obtained through the service call operation to the second M2M platform.

7. The method according to claim 5 or 6, wherein the information of the service to be published includes a serving Uniform Resource Locator, URL, of the service to be published.

## Patentansprüche

1. Maschine-Maschine-, M2M, Plattform-Cloudsystem, umfassend:
einen M2M Open Service Manager und zwei oder mehr M2M-Plattformen, die jede ein Proxymodul umfassen,
wobei der M2M Open Service Manager dazu konfiguriert ist, mit jeder der zwei oder mehr M2M-Plattformen über das jeweilige Proxymodul zu kommunizieren, und jede der zwei oder mehr M2M-Plattformen dazu konfiguriert ist, miteinander über ihre jeweiligen Proxymodule zu kommunizieren;
wobei:
die zwei oder mehr M2M-Plattformen mindestens eine erste M2M-Plattform und eine zweite M2M-Plattform umfassen;
die zweite M2M-Plattform dazu konfiguriert ist, eine Dienst-Erkundigungsanfrage an den M2M Open Service Manager über das Proxymodul der zweiten M2M-Plattform zu senden, Informationen bezüglich eines Dienstes, der aufgerufen werden soll, vom M2M Open Service Manager zu beziehen, gemäß den Informationen bezüglich des Dienstes, der aufgerufen werden soll, eine Dienst-Aufrufanfrage, welche die Informationen bezüglich des Dienstes, der aufgerufen werden soll, einschließt, über das Proxymodul der zweiten M2M-Plattform an eine erste M2M-Plattform zu senden, welche eine Dienstfähigkeit zum Aufrufen des Dienstes, der aufgerufen werden soll, aufweist, und ein Aufrufergebnis über das Proxymodul der zweiten M2M-Plattform von der ersten M2M-Plattform zu empfangen;
**dadurch gekennzeichnet, dass** der M2M Open Service Manager dazu konfiguriert ist, die Informationen bezüglich des Dienstes, der aufgerufen werden soll, in Antwort auf die Dienst-Erkundigungsanfrage zu erhalten, und die erhaltenen Informationen an die zweite M2M-Plattform zurückzugeben;
dadurch, dass der M2M Open Service Manager weiter dazu konfiguriert ist, ein Prüffeld zur Authentifizierung zu erzeugen, und die Informationen bezüglich des Dienstes, der aufgerufen werden soll, einschließlich des Prüffeldes an die zweite M2M-Plattform zurückzugeben;
und dadurch, dass die erste M2M-Plattform dazu konfiguriert ist, die Dienst-Aufrufanfrage einschließlich des Prüffeldes über das Proxymodul der ersten M2M-Plattform zu empfangen; Authentifizierung für den M2M Open Service Manager basierend auf dem Prüffeld zu initiieren; einen der Dienst-Aufrufanfrage entsprechenden Dienst-Aufrufvorgang durchzuführen, wenn die Authentifizierung bestanden wird, und das durch den Dienst-Aufrufvorgang erhaltene Aufrufergebnis an die zweite M2M-Plattform über das Proxymodul der ersten M2M-Plattform zurückzugeben.

2. System nach Anspruch 1, wobei
jeder aus dem M2M Open Service Manager und dem Proxymodul mit einer Dienst-Veröffentlichungsschnittstelle und einer Dienst-Erkundigungsschnittstelle versehen ist, die zur Interaktion zwischen der M2M-Plattform und dem M2M Open Service Manager dienen.

3. System nach Anspruch 1 oder 2, wobei jeder aus dem M2M Open Service Manager und dem Proxymodul mit einer Dienst-Stornierungsschnittstelle und/oder einer Authentifizierungsschnittstelle versehen ist.

4. System nach Anspruch 1 oder 2, wobei:
das Proxymodul mit einer Dienst-Aufrufschnittstelle zur Interaktion zwischen den M2M-Plattformen versehen ist, um eine Fähigkeits-Aufrufschnittstelle für die M2M-Plattform, zu der das Proxymodul gehört, bereitzustellen.

5. Maschine-Maschine-, M2M, Dienst-Aufrufverfahren, umfassend:
Beziehen (301), durch eine zweite M2M-Plattform, von Informationen bezüglich eines Dienstes, der aufgerufen werden soll;
Senden (302), durch die zweite M2M-Plattform gemäß den Informationen bezüglich des Dienstes, der aufgerufen werden soll, einer Dienst-Aufrufanfrage, welche die Informationen bezüglich des Dienstes, der aufgerufen werden soll, einschließt, über das Proxymodul der zweiten M2M-Plattform an eine erste M2M-Plattform, welche eine Dienstfähigkeit zum Aufrufen des Dienstes, der aufgerufen werden soll, aufweist; und
Empfangen (303), durch die zweite M2M-Plattform, eines Aufrufergebnisses über das Proxymodul der zweiten M2M-Plattform von der ersten M2M-Plattform;
wobei das Beziehen, durch die zweite M2M-Plattform, der Informationen bezüglich des Dienstes, der aufgerufen werden soll, umfasst:
Senden, durch die zweite M2M-Plattform, einer Dienst-Erkundigungsanfrage an einen M2M Open Service Manager über das Proxymodul der zweiten M2M-Plattform; und
in Antwort auf die Dienst-Erkundigungsanfrage, Erhalten, durch den M2M Open Service Manager, der Informationen bezüglich des Dienstes, der aufgerufen werden soll, und Zurückgeben der erhaltenen Informationen an die zweite M2M-Plattform;
**dadurch gekennzeichnet, dass** die durch die zweite M2M-Plattform bezogenen Informationen bezüglich des Dienstes, der aufgerufen werden soll, weiter umfassen: ein vom M2M Open Service Manager erzeugtes Prüffeld zur Authentifizierung, und
das Verfahren weiter umfasst: bevor die zweite M2M-Plattform das Aufrufergebnis über das Proxymodul der zweiten M2M-Plattform von der ersten M2M-Plattform empfängt,
Empfangen, durch die erste M2M-Plattform, der Dienst-Aufrufanfrage, welche das Prüffeld einschließt, über das Proxymodul der ersten M2M-Plattform;
Initiieren von Authentifizierung für den M2M Open Service Manager basierend auf dem Prüffeld;
Durchführen eines der Dienst-Aufrufanfrage entsprechenden Dienst-Aufrufvorgangs, wenn die Authentifizierung bestanden wird; und
Zurückgeben des durch den Dienst-Aufrufvorgang erhaltenen Aufrufergebnisses an die zweite M2M-Plattform über das Proxymodul der ersten M2M-Plattform.

6. Verfahren nach Anspruch 5, weiter umfassend: bevor die zweite M2M-Plattform das Aufrufergebnis über das Proxymodul der zweiten M2M-Plattform von der ersten M2M-Plattform empfängt,
Empfangen, durch die erste M2M-Plattform, der Dienst-Aufrufanfrage über das Proxymodul der ersten M2M-Plattform, Durchführen eines der Dienst-Aufrufanfrage entsprechenden Dienst-Aufrufvorgangs, und Zurückgeben, über das Proxymodul der ersten M2M-Plattform, des durch den Dienst-Aufrufvorgang erhaltenen Aufrufergebnisses an die zweite M2M-Plattform.

7. Verfahren nach Anspruch 5 oder 6, wobei die Informationen bezüglich des Dienstes, der veröffentlicht werden soll, einen dienenden Uniform Resource Locator, URL, des Dienstes einschließen, der veröffentlicht werden soll.

## Revendications

1. Système en nuage de plateforme de communication entre machines, M2M, comprenant :
un gestionnaire de service ouvert M2M, et deux plateformes M2M ou plus comprenant chacune un module mandataire,
dans lequel le gestionnaire de service ouvert M2M est configuré pour communiquer avec chacune des deux plateformes M2M ou plus via le module mandataire respectif, et les deux plateformes M2M ou plus sont chacune configurées pour communiquer les unes avec les autres via leurs modules mandataires respectifs ;
dans lequel :
les deux plateformes M2M ou plus comprennent au moins une première plateforme M2M et une seconde plateforme M2M ;
la seconde plateforme M2M est configurée pour envoyer une demande de requête de service au gestionnaire de service ouvert M2M via le module mandataire de la seconde plateforme M2M, acquérir des informations d'un service à appeler depuis le gestionnaire de service ouvert M2M, envoyer, selon les informations du service à appeler, une demande d'appel de service incluant les informations du service à appeler via le module mandataire de la seconde plateforme M2M à une première plateforme M2M ayant une capacité de service d'appel du service à appeler, et recevoir un résultat d'appel via le module mandataire de la seconde plateforme M2M en provenance de la première plateforme M2M ;
**caractérisé en ce que** le gestionnaire de service ouvert M2M est configuré pour obtenir les informations du service à appeler en réponse à la demande de requête de service, et renvoyer les informations obtenues à la seconde plateforme M2M ;
**en ce que** le gestionnaire de service ouvert M2M est en outre configuré pour générer un champ de vérification d'authentification, et renvoyer les informations du service à appeler incluant le champ de vérification à la seconde plateforme M2M ;
et **en ce que** la première plateforme M2M est configurée pour recevoir la demande d'appel de service incluant le champ de vérification via le module mandataire de la première plateforme M2M ; débuter une authentification du gestionnaire de service ouvert M2M d'après le champ de vérification ; réaliser une opération d'appel de service correspondant à la demande d'appel de service lorsque l'authentification est réussie, et renvoyer le résultat d'appel obtenu par le biais de l'opération d'appel de service à la seconde plateforme M2M via le module mandataire de la première plateforme M2M.

2. Système selon la revendication 1, dans lequel
chacun du gestionnaire de service ouvert M2M et du module mandataire est pourvu d'une interface de publication de service et d'une interface de requête de service qui servent à interagir entre la plateforme M2M et le gestionnaire de service ouvert M2M.

3. Système selon la revendication 1 ou 2, dans lequel chacun du gestionnaire de service ouvert M2M et du module mandataire est pourvu d'une interface d'annulation de service et/ou d'une interface d'authentification.

4. Système selon la revendication 1 ou 2, dans lequel :
le module mandataire est pourvu d'une interface d'appel de service pour interagir entre les plateformes M2M, de façon à fournir une interface d'appel de capacité pour la plateforme M2M à laquelle appartient le module mandataire.

5. Procédé d'appel de service de communication entre machines, M2M, comprenant :
l'acquisition (301), par une seconde plateforme M2M, d'informations d'un service à appeler ;
l'envoi (302), par la seconde plateforme M2M selon les informations du service à appeler, d'une demande d'appel de service incluant les informations du service à appeler via le module mandataire de la seconde plateforme M2M à une première plateforme M2M ayant une capacité de service d'appel du service à appeler ; et
la réception (303), par la seconde plateforme M2M, d'un résultat d'appel via le module mandataire de la seconde plateforme M2M en provenance de la première plateforme M2M ;
dans lequel l'acquisition, par la seconde plateforme M2M, des informations du service à appeler comprend :
l'envoi, par la seconde plateforme M2M, d'une demande de requête de service à un gestionnaire de service ouvert M2M via le module mandataire de la seconde plateforme M2M ; et
en réponse à la demande de requête de service, l'obtention, par le gestionnaire de service ouvert M2M, des informations du service à appeler, et le renvoi des informations obtenues à la seconde plateforme M2M ;
**caractérisé en ce que** les informations du service à appeler acquises par la seconde plateforme M2M comprennent en outre : un champ de vérification d'authentification généré par le gestionnaire de service ouvert M2M, et
le procédé comprenant en outre : avant que la seconde plateforme M2M reçoive le résultat d'appel via le module mandataire de la seconde plateforme M2M en provenance de la première plateforme M2M,
la réception, par la première plateforme M2M, de la demande d'appel de service incluant le champ de vérification via le module mandataire de la première plateforme M2M ;
le début d'une authentification du gestionnaire de service ouvert M2M d'après le champ de vérification ;
la réalisation d'une opération d'appel de service correspondant à la demande d'appel de service lorsque l'authentification est réussie ; et
le renvoi du résultat d'appel obtenu par le biais de l'opération d'appel de service à la seconde plateforme M2M via le module mandataire de la première plateforme M2M.

6. Procédé selon la revendication 5, comprenant en outre : avant que la seconde plateforme M2M reçoive le résultat d'appel via le module mandataire de la seconde plateforme M2M en provenance de la première plateforme M2M,
la réception, par la première plateforme M2M, de la demande d'appel de service via le module mandataire de la première plateforme M2M, la réalisation d'une opération d'appel de service correspondant à la demande d'appel de service, et le renvoi via le module mandataire de la première plateforme M2M du résultat d'appel obtenu par le biais de l'opération d'appel de service à la seconde plateforme M2M.

7. Procédé selon la revendication 5 ou 6, dans lequel les informations du service à publier incluent un localisateur uniforme de ressources, URL, de desserte du service à publier.
